# EUROPEAN PATENT SPECIFICATION

(11) **EP 0 848 743 B1**
(45) Date of publication and mention of the grant of the patent: **19.05.1999**
(21) Application number: 96925829.2
(22) Date of filing: 22.07.1996
(51) Int. Cl.: C10L 5/44, B09B 3/00

(54) **PROCESSING OF RESILIENT MATERIALS**
VERARBEITUNG VON ELASTISCHEN MATERIALEN
TRAITEMENT DE MATERIAUX SOUPLES

(30) Priority: 22.07.1995 GB 9515088
(43) Date of publication of application: 24.06.1998
(73) Proprietor: Rees, William Geraint, Llanelli, Camarthenshire SA15 5DJ (GB)
(72) Inventor: Rees, William Geraint, Llanelli, Camarthenshire SA15 5DJ (GB)
(74) Representative: Austin, Hedley William
(86) International application number: GB9601784
(87) International publication number: WO9704047

(56) References cited:
- CA-A- 1 067 286
- DE-A- 3 942 479

## Description

The present invention is concerned with processing of resilient organic macromolecular materials (and managing the properties of media bonded by such materials), such that the resulting bonded media may be suitable for a variety of end-uses, such as, for example, animal feeds and fuels.

There are many known resilient organic macromolecular materials, examples of which are peat, sewage sludge, grass, animal feedstuffs, wood chips, sawdust, straw, waste paper, municipal refuse, cardboard and shredded, milled or ground plastics material. It is often very difficult to process such materials reliably and reproducibly into useful products, because of the wide variations in material compositions and properties. For example, it is often difficult to compact such materials because of their resilience.

I have devised a method of using and processing such macromolecular materials which is both reliable and reproducible, and which can result in compacted bonded media of carefully managed and controlled properties.

The present invention is concerned with a method of producing a chemically bonded medium, from a starting material comprising a resilient organic macromolecular material (such as peat), in which the organic macromolecular material is in cut elongate or finely divided form.

According to a first aspect of the invention, the method comprises:
(a) at least partly thermally drying the cut elongate or finely divided material, under conditions permitting escape of water vapour therefrom, such that the dried material has a predominantly hydrophobic surface and a water content of not more than 10% by weight, the drying optionally comprising flashing at least the surface of the material;
(b) subjecting at least some of the dried material to vapour pressure equilibration, under conditions inhibiting escape of water vapour and other volatiles, such that the predominantly hydrophobic surface is rendered hydrophilic; and
(c) mixing the product of step (b) with a lignosulfonate, with sufficient heat being applied to maintain the lignosulfonate in fluid form, such that the lignosulfonate forms a coating film on the hydrophilic surface; and
(d) causing partial polymerisation of the lignosulfonate on the surface to produce a flowable, substantially non-resilient, chemically bonded medium.

The macromolecular material is at least partly thermally dried under conditions permitting escape of water vapour, such that the resulting dried material has a predominantly hydrophobic surface and a water content of not more than 10% by weight (the water content after this stage being preferably not more than 5%, more preferably 2 to 3%).

According to a second aspect of the invention, the method comprises:
(a) heating and/or drying said organic macromolecular material to a dry content of less than 10% by weight;
(b) mixing the organic macromolecular material from step (a) with a lignosulfonate, with sufficient heat being applied to maintain the lignosulfonate in fluid form, such that the lignosulfonate forms a coating film on the surface of said organic macromolecular material; and
(c) causing partial polymerisation of said lignosulfonate on said surface to produce a flowable, substantially non-resilient, chemically bonded medium.

The drying may include a subsequent step in which at least the surface of the dried material is flashed (for example using hot air at 350 to 450°C). This flashing can drive off further moisture, and cause degradation and change of some compounds present in the resilient macromolecular material. (These may, for example, be waxes, lignins, cellulitic remains or resins when the resilient material is peat.)

At least some of the dried material is then subjected to vapour pressure equilibration, under conditions inhibiting escape of water vapour and other volatiles, such that the predominantly hydrophobic surface is rendered hydrophilic. Such equilibration may, for example, be in a closed container (such as a hopper or bin unit maintained at say about 80°C); the equilibrated material has a wet, hydrophilic surface, with a substantially dry interior.

The hydrophilic surfaced material is then mixed with an aqueous lignosulfonate, under conditions such that the lignosulfonate does not attain a predetermined temperature (preferably not exceeding 80°C). Sufficient heat should, however, be applied to maintain the lignosulfonate in fluid form, such that the lignosulfonate forms a coating film (typically a monolayer or the like) on the hydrophilic surface; the lignosulfonate is then caused to undergo partial polymerisation at a temperature not exceeding 150°C on the surface of the finely divided material, so as to produce a flowable, substantially non-resilient, chemically bonded medium. For certain organic macromolecular materials (such as for example certain forms of sewage sludge) the required heating/drying prior to mixing with the aqueous lignosulfonate may be achieved using conventional heating/drying means. It is however believed that the mixing and subsequent partial polymerisation of such conventionally heated/dried material is both novel and inventive per se.

Depending on the nature of the materials used in the method according to the invention, calcium (for example, as calcium oxide) may be added together with the lignosulfonate.

The chemically bonded medium may be passed to a storage location before being further processed. If stored at this stage, the medium may be subsequently treated with water or steam (for example, saturated or superheated steam) before being further processed by, for example, agglomeration or compacting.

The water-treated or steam-treated material may, in some embodiments of the invention, be subsequently cured (for example, by heating at 250 to 280°C for 1 to 1.5 hours).

Either after such storage, or immediately following the partial polymerisation, the medium may be compacted and compressed (or agglomerated); the resulting compressed medium is substantially Non-resilient (devoid of the natural resilience of the original macromolecular material) such that the resulting compacted material does not tend to spring apart.

The major influence on the mechanical properties of the resulting compacted material is the bonding between the particles. On compacting with heat, the compacted material attains chemical bonding which extends throughout the structure, establishing a metamorphic change throughout the compacted material structure. The nature of this bonding is important not only under test conditions, but also under service conditions. If the bonding were to be of a purely adhesive nature, there would be a separate phase at the interface between the particles; according to the invention, the bonding is chemical in nature and extends throughout the agglomerate structure.

The particles become fused and chemically bonded to one another in such a way that the macromolecular material and any particulate organic material (such as a carbonaceous fuel) present in the mix cease to exist as separate entities, the whole compacted mass appearing to act as a single homogeneous mass.

The use in the method according to the invention of a lignosulfonate, which is a material typically produced as a coproduct in the cellulose pulp industry, results in a chemically bonded medium which is a substantially non-resilient friable material, but which can be regenerated into a pressure-sensitive, non-friable form (which is still non-resilient) by suitable re-activation (using, for example, water, urea or the like).

The lignosulfonate present in the bonded medium may be regenerated by reaction with urea or a urea derivative, which may contribute to the plasticity of the resulting mix. This reaction of lignin with urea or a urea derivative is one which is known per se.

The ability to manage the properties of the resulting product makes it possible to provide lignin derivatives at various stages of the method according to the invention in forms analogous to those occurring in nature; for example, the lignosulfonate starting material is analogous to lignin present in thinner branches of a tree, while the lignosulfonate in a final pressed and compacted product is analogous to lignin present in the trunk of a tree. The lignosulfonate present in the partially polymerised medium is in an intermediate state.

The lignosulfonate is preferably present in a minor amount, such as up to about 15% by weight, relative to the hydrophilic surfaced product, the amount referred to relating to lignosulfonate in aqueous form.

The lignosulfonate may be used in aqueous form, such as an aqueous solution. A preferred aqueous solution contains 40 to 60% by weight (on a dry basis) of the lignosulfonate.

The lignosulfonate may include any suitable cation or cations; examples of suitable cations include ammonium, sodium, calcium and magnesium. Calcium lignosulfonate is preferred for many end-uses of the bonded medium, for the following reasons:
(a) when the final product is to be combusted, the calcium can react with sulfur dioxide to form calcium sulfate, and fuse with ash products; and
(b) when the final product is to be used as animal feed, calcium is a useful nutrient.

It is particularly preferred that the lignosulfonate should be substantially sugar-free (sugars and the like having been removed, typically by fermentation or the like).

When the lignosulfonate is in the form of the calcium salt, the calcium ions may cause separation of lignosulfonate into α and β forms (which are defined according to the solubility of the lignin in a bisulfite solution - the α lignins produce lignosulfonates which are less heavily sulfonated than β lignins, and which are therefore more insoluble, when subjected to the same conditions).

In one preferred embodiment of the invention, the lignosulfonate may be in highly dilute form, containing smaller lignosulfonate molecules. Such dilute lignosulfonate may comprise the permeate residue from a process of ultrafiltration of a more concentrated lignosulfonate solution.

The resilient organic material may be, for example, comminuted peat or sewage sludge, preferably in the form of flakes, powder or granules with a particle size of not more than 10 mm, more preferably less than 2 millimetres. Alternatively, it may be a cut elongate plant material, such as grass.

Typical ways of achieving partial polymerisation of the lignosulfonate are as follows:
(a) using oil-or steam-heated hollow mixing screws (typically a twin screw unit, of the type known commercially as "holoflite"), which can give excellent heat transfer to the finely divided material;
(b) using a tumble action fluid bed system, similar to a conventional tablet coating pan, in which, typically, the pan is inclined and material in the pan caused to tumble by means of suitably profiled paddle blades, used together with hot air supply (the hot air supply being typically at a temperature in the range 300 to 500°C); and
(c) using a hot air oven (typically at about 130°C) or a vacuum oven (typically at about 90°C and about 25in Hg).

As a general rule, however, the most significant parameters needed for control of the partial polymerisation are supply of heat and/or oxygen.

The material which has been subjected to vapour pressure equilibration, after it has been mixed with a lignosulfonate in the method according to the invention, may further be mixed with powdered or finely divided particulate organic material carbonaceous fuel. The partial polymerisation of the lignosulfonate may then be in the presence of oxygen (for example, as air).

The resulting flowable, substantially non-resilient and non-tacky, chemically bonded medium may be shaped under pressure (preferably following re-activation using, for example, water, urea or the like) to form agglomerates. Such agglomerates may be briquettes (formed between shaped dies or the like), pellets, bodies formed by extrusion, pan agglomeration or the like. The mix to be agglomerated may be shaped by any suitable apparatus, such as a ring-roll press. When the agglomerates are in the form of briquettes, these are preferably pillow-shaped.

When a carbonaceous fuel is present, it may be any suitable particulate carbonaceous material, such as petroleum coke, anthracite, bituminous or sub-bituminous coal, coking coal or lignite. Such a fuel typically has a particle size in the range indicated above for the resilient material. The amount of the carbonaceous fuel is typically from 30 to 70% by weight, based on the weight of the resilient material.

In a preferred embodiment of the invention, the resilient macromolecular material according to the invention may be an animal feedstuff, such as one comprising one or more of soya, beet pulp and grass. It is particularly preferred that the feedstuff comprises grass (a cut elongate plant material), in which case, a significant advantage which can be achieved is that a stable processed material can be obtained which retains and enhances the desirable odour of fresh grass for a prolonged period (such as for several months, so that the processed grass can be used in the form of blocks as winter forage). The method according to the invention can therefore result in an enhanced controlled release fresh grass odour.

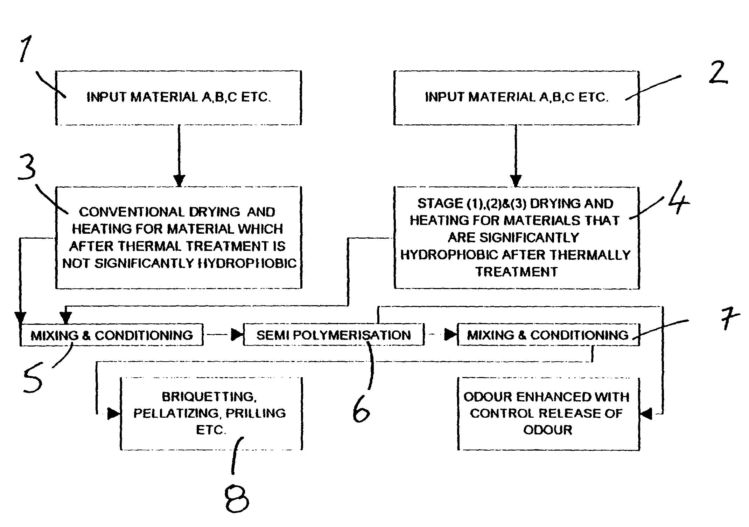

The present invention will be illustrated, by way of example only, with reference to the accompanying drawing, which is a flow chart showing an exemplary sequence of operations in the method according to the invention.

Referring to the flowchart, there are shown two possible start conditions (blocks 1,2) depending upon the organic macromolecular material which is to be processed. Certain materials (block 1) which are not significantly hydrophobic following heat treatment may be conventionally heated and dried by conventional heating/drying (block 3).

Other start materials, which would otherwise be significantly hydrophobic following conventional heat treatment, are subjected to treatment in a three stage process (block 4). The first stage comprises partly thermally drying the material under conditions permitting the escape of water vapour (such that the resulting dried material has a predominantly hydrophobic surface and substantially reduced water content). Secondly the material may be flashed with a hot gas before a further stage in which the dried material is subjected to vapour pressure equilibration under conditions inhibiting escape of water vapour and other volatiles. The predominantly hydrophobic surface of the material is thereby rendered predominantly hydrophilic.

Dependant upon the particular starting material, heat conditioned material (from either process block 3 or block 4) is subsequently mixed and conditioned (block 5) with aqueous lignosulfonate in the manner described herein in order to form a coating film on the surface of the organic macromolecular material. At this stage (or prior to mixing with lignosulfonate) the organic macromolecular material may be mixed with additional material such as particulate carbonaceous fuel (e.g. anthracite coal).

Subsequently, the material undergoes a partial (but reversible) polymerisation step (block 6) in which the lignosulfonate is heated to a level in the region of, but below, the temperature at which irreversible polymerisation would occur.

Following polymerisation, the material may either be stored or used in its current form. Alternatively, following polymerisation (block 6) or storage, the material may be further processed typically by mixing or otherwise conditioning (block 7) typically comprising regeneration utilising water/steam and/or urea to a pressure sensitive material form. Subsequent processing may comprise compacting for example to form briquettes, pellets and so on (block 8).

The following Examples are further illustrative of the present invention.

### Example 1

Air dried peat with a moisture content of approx 15% and a particle size of approx 4 mm, was dried in a hot air oven set at 105°C to reduce the moisture content to approx 2% by weight. The dried peat was then allowed to equilibrate at 80°C. 50g of the dried peat was placed in a sealed container without compaction and placed in a hot air oven set at 80°C. 50g of anthracite coal with a moisture content of approx 1% by weight and a particle size approx 2mm, was heated to 80°C and allowed to equilibrate. 50g of the anthracite was then placed in a sealed container such that the 50g fills the container without compaction. The vapour pressure in both the peat and anthracite sealed containers was allowed to equilibrate; the equilibrated vapour pressure being retained for 2 hours. The surface of the particles were thus rendered hydrophilic.

The peat and anthracite were then transferred to a Beaken double shafted blade mixer with a water jacket maintained at 80°C and mixed for 1 minute with the mixer lid closed. The product was then added over a period of 5s, with 15g of 50% solids aqueous calcium lignosulfonate which had been heated in a water bath at 80°C. The material was then mixed for 2.5 minutes with the lid closed and conditioned in the mixer for 2 minutes with the lid open.

The conditioned and relatively free flowing material was then transferred to a hot air oven set at 130°C and processed so as to achieve semi-polymerisation of the lignosulfonate over a period of 1.5 hrs. The semi-polymerised material was then transferred to the Beaken mixer and allowed to equilibrate with the water jacket at a temperature of 80°C. 2g of urea was added to the mix incremental over a period of 20 secs and mixed for 1 minute with the lid shut; 1g of water at 80°C was then added and further mixed for 2.5 minutes with the lid closed. The lid was opened and the material was conditioned for 2 minutes. The relatively free flowing conditioned material was transferred to a floating ring die, preheated to 60°C, for pressing; a strong green briquette with no resilience cracks was produced.

The briquettes produced by this method were tested for thermal shock by placing the briquettes at ambient temperature in a muffled furnace set at 800°C. Briquettes were supported on a three point contact stand. There was no degradation or flaking of the briquettes; the briquettes ignited and retained their integrity until only ash was left. The briquettes produced by the above method were also ignited in a small hearth. Radiant heat measurements were made using a pyrometer; when these measurements were compared with propriety premium anthracite briquettes the indicated radiant heat levels were as high as twice that produced with the 100% anthracite briquette. The peat and ash formed are capable of converting convection heat produced by the anthracite to radiant heat.

### Example 2

Air dried peat with a moisture content of approx 15% and a particle size of approx 4 mm, was processed in a tumbling fluid bed with a gas input temperature of approx 300°C to reduce the moisture content to approx 2% by weight. The dried peat was then allowed to equilibrate at 80°C. 1Kg of the dried peat was placed in a sealed container so as to fill the container without compaction. The contanier was placed in a hot air oven set at 80°C. Anthracite with a moisture content of approx 1% by weight and a particle size approx 2 mm was heated to 80°C and allowed to equilibrate. 1Kg of the anthracite was then placed in a sealed container so as to fill the container without compaction. The vapour pressure in both the peat and anthracite sealed containers was allowed to equilibrate; the equilibrated vapour pressure being retained for 2 hrs whereby the surface of the particles were rendered hydrophilic.

The peat and anthracite were then transferred to a Baker Perkins double shafted blade mixer with a water jacket maintained at 80°C and mixed for 1 minute with the mixer lid closed. 300g of 50% solids aqueous calcium lignosulfonate which had been heated in a water bath at 80°C was then added over a period of 5s. The material was then mixed for 2.5 mins with the lid closed and conditioned in the mixer for a 2 mins with the lid open.

The conditioned and relatively free flowing material was then transferred to a twin screw Denver holoflite laboratory dryer. The holoflite screws and the jacket were heated with thermal transfer oil at 300°C from a Churchill heater circulator and processed in the heated holoflite screws so as to achieve semi-polymerisation of the lignosulfonate over a period of 30 mins. The semi-polymerised material was then transferred to the Baker Perkins mixer and allowed to equilibrate with the water jacket at a temperature of 80°C. 30g of urea was added to the mix incremental over a period of 20 secs and mixed for 1 min with the lid closed; 10g of water at 80°C was then added and further mixed for 2.5 minutes with the lid closed. The lid was opened and the material was conditioned for 2 minutes. The relatively free flowing conditioned material was then pressed and tested as in example 1.

### Example 3

Air dried peat with a moisture content of approx 15% and a particle size of approx 4 mm, was processed in a tumbling fluid bed with a gas input temperature of approx 300°C to reduce the moisture content to approx 2% by weight. The dried peat was then allowed to equilibrate at 80°C. 2Kg of the dried peat was placed in a sealed container so as to fill the container without compaction. The container was placed in a hot air oven set at 80°C. The temperature was maintained accurately at 80°C by means of an external controller. The vapour pressure in the sealed container was allowed to equilibrate; the equilibrated vapour pressure being retained for 2 hrs. The surface of the particles were thus rendered hydrophilic.

The peat was then transferred to a Baker Perkins double shafted blade mixer with a water jacket maintained at 80°C. 300g of 50% solids aqueous calcium lignosulfonate which had been heated in a water bath at 80°C was then added over a period of 5s to the product. The material was then mixed for 2.5mins with the lid closed and conditioned in the mixer for a 2 mins with the lid open.

The conditioned and relatively free flowing material was then transferred to a twin screw Denver holoflite laboratory dryer. The holoflite screws and the jacket were heated with thermal transfer oil at 300°C from a Churchill heater circulator and processed in the heated holoflite screws so as to achieve semi-polymerisation of the lignosulfonate over a period of 30 mins. The semi-polymerised material was then transferred to the Baker Perkins mixer and the temperature allowed to equilibrate with the water jacket at a temperature of 80°C. 30g of urea was added to the mix incremental over a period of 20 secs and mixed for 1 minute with the lid closed; 10g of water at 80°C was then added and further mixed for 2.5 minutes with the lid closed. The lid was opened and the material was conditioned for 2 minutes. The relatively free flowing conditioned material was then transferred to the floating ring die (preheated to 60°C) for pressing. A strong green briquette with no resilience cracks was produced. The briquettes produced by this method were tested for thermal shock by placing briquettes at ambient temperature in a muffled furnace set at 800°C and briquettes were supported on a three point contact stand. There was no degradation or flaking of the briquettes. The briquettes ignited and retained their integrity until only ash was left.

### Example 4

Propriety processed long grass approx 20-70 mm long was processed in a tumbling fluid bed with a gas input temperature of approx 300°C to reduce the moisture content to approx 4% by weight. The long grass was then allowed to equilibrate to 80°C. 1.5Kg of the long grass was placed in a sealed container so as to fill the container without compaction and placed in a hot air oven set at 80°C. The vapour pressure in the sealed container was allowed to equilibrate; the equilibrated vapour pressure being retained for 2 hrs whereby the surface of the grass was rendered hydrophilic.

The long grass was then transferred to a Baker Perkins double shafted blade mixer with a water jacket maintained at 80°C. 150g of 50% solids aqueous calcium lignosulfonate which had been heated in a water bath at 80°C was then added over a period of 5s to the grass. The material was then mixed for 2.5 mins with the lid closed and conditioned in the mixer for a 2 mins with the lid open.

The conditioned and relatively free flowing material was then transferred to the tumbling fluid bed and exposed to tumbling fluidising action of hot air at 300°C so as to achieve semi-polymerisation of the lignosulfonate over a period of 5 minutes. The semi-polymerised material was then transferred to the Baker Perkins mixer and allowed to equilibrate with the water jacket at a temperature of 80°C. 30g of urea powder was added to the mix incremental over a period of 20 secs and mixed for 1 min with the lid closed; 10g of water at 80°C was then added and further mixed for 2.5 mins with the lid closed. The lid was then opened and the material was conditioned for 2 minutes.

The relatively free flowing conditioned material was transferred to a cylindrical block die preheated to 60°C for pressing. A strong hard block was produced which was 65 mm long and 40 mm in diameter; there was no resilience cracking. The natural odour of fresh grass was very strong and enhanced; this grass odour was stronger than that produced by the original long grass.

### Example 5

A mixture was prepared containing 600g of propriety processed long grass approx 20-70mm long, 600g of soya bean meal and 600g of beet pulp. The mixture was processed in a tumbling fluid bed with a gas input temperature of approx 300°C to reduce the moisture content to approx 4% by weight. The mixture was then allowed to equilibrate at 80°C. 1.5Kg of the mixture was placed in a sealed container so as to fill the container without compaction and placed in a hot air oven set at 80°C. The vapour pressure in the sealed container was allowed to equilibrate; the equilibrated vapour pressure being retained for 2 hrs. The surface of the particles were thus rendered hydrophilic

The mixture was then transferred to a Baker Perkins double shafted blade mixer with a water jacket maintained at 80°C and mixed for lmin with the lid closed. 150g of 50% solids aqueous calcium lignosulfonate which had been heated in a water bath at 80°C was then added over a period of 5s to the mixture. The material was then mixed for 2.5 mins with the lid closed and conditioned in the mixer for a 2 mins with the lid open.

The conditioned and relatively free flowing material was then transferred to the tumbling fluid bed and exposed to tumbling fluidising action of hot air at 300°C so as to achieve semi-polymerisation of the lignosulfonate over a period of 5 minutes. The semi-polymerised material was then transferred to the Baker Perkins mixer and allowed to equilibrate with the water jacket at a temperature of 80°C. 30g of urea powder was added to the mix incremental over a period of 20 secs and mixed for 1 min with the lid closed; 10g of water at 80°C was then added and further mixed for 2.5 mins with the lid closed. The lid was opened and the material was conditioned for 2 mins.

The relatively free flowing conditioned material was then pressed as in example 5 and produced a block with the natural odour of fresh grass that was stronger than that produced by the original long grass.

### Example 6

40g of autoclave and dried sewage sludge was heated in a hot air oven set at 126°C for 30 mins. 40g of Pitsburg No8 coal was also dried and heated in the same oven at 126°C for 30min. The sludge and the coal were then mixed for 1 min with the lid closed. 12g of calcium lignosulfonate (Borresperse Ca approx 50% solids) was added over a time of 5 secs, mixed for 2.5 mins with the lid closed and then the material was conditioned for 2 mins with the lid open. The material was then transferred to a stainless steel hot air oven set at 136-137°C for 2hours. The semi polymerised material was then transferred form the hot air oven to the Beakin mixer with the water jacket at 80°C. 2g of urea powder was added to the mix incremental over a period of 20 secs. The material was then mixed for 1 min with the lid closed; 1g of water was then added and the material was mixed for a further 2.5 mins with the lid closed and then conditioned for 2minutes with the lid open.

The material was then transferred to a floating ring briquette die which was pre-heated to 60°C. The material in the die was given an initial compaction using hand pressure and then pressed on a hydraulic press with 6000lbs per square inch on a 2⅛ins diameter ram (21,279lbs load). A strong green briquette with a smooth surface was produced with no resilience cracks.

The green briquette was placed in a stainless steel carbonisation pot and carefully surrounded by fine anthracite to minimise the presence of air. The carbonisation pot was placed in the carbonisation oven with both the oven and container at ambient temperature; the oven being set to ramp its temperature to reach 800°C in 1.25hours. Smoke was observed at 450°C but had virtually finished by the time the temperature had reached 800°C; the carbonisation was maintained at 800°C for 5 mins. The carbonisation pot was removed from the oven, there was a small flame from the container; the flame was not smoking. The weight of the carbonised briquette was 25.6g producing a weight loss of 45.6%. There was no visible cracks and the briquette was in the form of coke. The appearance of the briquette gave no indication of its component parts. The briquette was crushed on a briquette test rig which had been independently calibrated for the test crushing strength was 153KgF.

## Claims

1. A method of producing a chemically bonded medium, which method comprises:
(a) providing a resilient organic macromolecular material, in which said organic macromolecular material is in cut elongate or finely divided form;
(b) at least partly thermally drying said cut elongate or finely divided material, under conditions permitting escape of water vapour therefrom, such that said dried material has a predominantly hydrophobic surface and a water content of not more than 10% by weight, said drying optionally comprising flashing at least the surface of said material;
(c) subjecting at least some of said dried material to vapour pressure equilibration, under conditions inhibiting escape of water vapour and other volatiles, such that said predominantly hydrophobic surface is rendered hydrophilic; and
(d) mixing the product of step (c) with a lignosulfonate, with sufficient heat being applied to maintain the lignosulfonate in fluid form, such that the lignosulfonate forms a coating film on said hydrophilic surface; and
(e) causing partial polymerisation of said lignosulfonate on said surface to produce a flowable, substantially non-resilient, chemically bonded medium.

2. A method according to claim 1, wherein said water content at step (b) is not more than 5%.

3. A method according to claim 1 or 2, wherein said coating film in step (d) is a monolayer or the like.

4. A method according to any of claims 1 to 3, wherein said chemically bonded medium from step (e) is stored before being further processed, and/or said chemically bonded medium from step (e) is further processed to render said chemically bonded medium pressure sensitive.

5. A method according to any of claims 1 to 4, wherein said chemically bonded medium from step (e) is treated with water or steam and/or urea.

6. A method according to any of claims 1 to 5, wherein said chemically bonded medium is further processed in a step comprising compacting and compression of said chemically bonded medium.

7. A method according to any of claims 1 to 6, wherein said lignosulfonate, in an aqueous form is present in an amount not more than 15% by weight, relative to the hydrophilic surfaced product

8. A method according to any of claims 1 to 7, wherein the lignosulfonate is used in an aqueous form containing 40-60% dry weight of said lignosulfonate.

9. A method according to any of claims 1 to 8, wherein the lignosulfonate is an ammonium, sodium, calcium or magnesium salt.

10. A method according to any of claims 1 to 9, wherein the lignosulfonate is substantially sugar-free.

11. A method according to any of claims 1 to 10, wherein the resilient material comprises comminuted peat or sewage sludge, preferably in the form of flakes, powder or granules, or cut grass.

12. A method according to any of claims 1 to 11, wherein said partial polymerisation is achieved in a hot air oven, a vacuum oven or by means of oil or steam heated hollow mixing screws or a tumble action fluid bed system.

13. A method according to any of claims 1 to 12, wherein said chemically bonded medium is shaped under pressure to form agglomerates.

14. A method of producing a chemically bonded medium, which method comprises:
(a) providing a resilient organic macromolecular material, such as peat, in which said organic macromolecular material is in cut, elongate or finely divided form;
(b) heating and/or drying said organic macromolecular material to a dry content of less than 10% by weight;
(c) mixing the organic macromolecular material from step (b) with a lignosulfonate, with sufficient heat being applied to maintain the lignosulfonate in fluid form, such that the lignosulfonate forms a coating film on the surface of said organic macromolecular material; and
(d) causing partial polymerisation of said lignosulfonate on said surface to produce a flowable, substantially non-resilient, chemically bonded medium.

15. A method according to claim 14, wherein the organic macromolecular material is mixed with a particulate organic material, such as a carbonaceous fuel.

16. A method according to claim 15, wherein said organic macromolecular material is mixed with said organic material prior to step (c).

17. A method according to any preceding claim, wherein the partial polymerisation step comprises elevating the temperature of the lignosulfonate on the surface of the organic macromolecular material to a temperature in the range from 110°C to 150°C.

## Patentansprüche

1. Verfahren zur Herstellung eines chemisch gebundenen Mediums, umfassend:
(a) das Bereitstellen eines nachgiebigen organischen makromolekularen Materials, wobei das organische makromolekulare Material in geschnitten-länglicher oder fein verteilter Form vorliegt;
(b) das zumindest teilweise thermische Trocknen des geschnitten-länglichen oder fein verteilten Materials, unter Bedingungen, die das Entweichen von Wasserdampf vom Material gestatten, derart, daß das getrocknete Material eine vorwiegend hydrophobe Oberfläche und einen Wassergehalt von nicht mehr als zehn Gewichtsprozent besitzt, wobei das Trocknen optional das Abflashen zumindest der Oberfläche des Materials umfaßt;
(c) die Dampfdruck-Equilibrierung von zumindest einem Teil des getrockneten Materials, unter Bedingungen, die das Entweichen von Wasserdampf und anderen flüchtigen Stoffen hemmen, derart, daß die vorwiegend hydrophobe Oberfläche hydrophil gemacht wird; und
(d) das Vermischen des Produkts aus Schritt (c) mit einem Lignosulfonat, wobei ausreichende Wärme appliziert wird, um das Lignosulfonat in flüssiger Form zu halten, derart, daß das Lignosulfonat einen Überzugs-Film auf der besagten hydrophilen Oberfläche bildet; und
(e) das Verursachen einer partiellen Polymerisation des Lignosulfonats auf der besagten Oberfläche, um ein fließfähiges, im wesentlichen unnachgiebiges, chemisch gebundenes Medium herzustellen.

2. Verfahren nach Anspruch 1, in dem der Wassergehalt in Schritt (b) nicht mehr als 5 % beträgt.

3. Verfahren nach Anspruch 1 oder 2, in dem der Überzugs-Film in Schritt (d) eine Monolage oder dergleichen ist.

4. Verfahren nach einem der Ansprüche 1 - 3, in dem das besagte chemisch gebundene Medium aus Schritt (e) vor der Weiterverarbeitung gelagert wird und/oder das chemisch gebundene Medium aus Schritt (e) weiterverarbeitet wird, um das chemisch gebundene Medium druckempfindlich zu machen.

5. Verfahren nach einem der Ansprüche 1 - 4, in dem das chemisch gebundene Medium aus Schritt (e) mit Wasser oder Dampf und/oder Harnstoff behandelt wird.

6. Verfahren nach einem der Ansprüche 1 - 5, in dem das chemisch gebundene Medium In einem Schritt weiterverarbeitet wird, der das Verdichten und Zusammendrücken des chemisch gebundenen Mediums umfaßt.

7. Verfahren nach einem der Ansprüche 1 - 6, in dem das Lignosulfonat in einer wässrigen Form in einer Menge vorliegt, die nicht mehr als 15 Gewichtsprozent ausmacht, bezogen auf das Produkt mit der hydrophilen Oberfläche.

8. Verfahren nach einem der Ansprüche 1 - 7, in dem das Lignosulfonat in einer wässrigen Form eingesetzt wird, die 40 % bis 60 % Trockenmasse des Lignosulfonats enthält.

9. Verfahren nach einem der Ansprüche 1 - 8, in dem das Lignosulfonat ein Ammonium-, Natrium-, Calcium- oder Magnesiumsalz ist.

10. Verfahren nach einem der Ansprüche 1 - 9, in dem das Lignosulfonat im wesentlichen zuckerfrei ist.

11. Verfahren nach einem der Ansprüche 1 - 10, in dem das nachgiebige Material zerkleinerten Torf oder Klärschlamm, vorzugsweise in Form von Flocken, Pulver oder Körnern, oder geschnittenes Gras umfaßt.

12. Verfahren nach einem der Ansprüche 1 - 11, in dem die partielle Polymerisation in einem Heißluftofen, einem Vakuumofen oder mittels einer öl- oder dampfbeheizten hohlen Mischschnecke oder mittels eines Tumble-Actlon-Wirbelschicht-Systems durchgeführt wird.

13. Verfahren nach einem der Ansprüche 1 - 12, in dem das chemisch gebundene Medium unter Druck geformt wird, um Agglomerate zu bilden.

14. Verfahren zur Herstellung eines chemisch gebundenen Mediums, umfassend:
(a) das Bereitstellen eines nachgiebigen organischen makromolekularen Materials, wie zum Beispiel Torf, wobei das organische makromolekulare Material In geschnittener, länglicher oder fein verteilter Form vorliegt;
(b) das Erwärmen und/oder Trocknen des organischen makromolekularen Materials bis auf einen Trockengehalt von weniger als zehn Gewichtsprozent;
(c) das Vermischen des organischen makromolekularen Materials aus Schritt (b) mit einem Lignosulfonat, wobei ausreichende Wärme appliziert wird, um das Lignosulfonat in flüssiger Form zu halten, derart, daß das Lignosulfonat einen überzugs-Film auf der Oberfläche des organischen makromolekularen Materials bildet; und
(d) das Verursachen einer partiellen Polymerisation des Lignosulfonats auf der Oberfläche, um ein fließfähiges, im wesentlichen unnachgiebiges, chemisch gebundenes Medium herzustellen.

15. Verfahren nach Anspruch 14, in dem das organische makromolekulare Material mit einem partikulären organischen Material, wie zum Beispiel kohlehaltigem Brennstoff, vermischt wird.

16. Verfahren nach Anspruch 15, in dem das organische makromolekulare Material mit dem organischen Material vor Schritt (c) vermischt wird.

17. Verfahren nach einem der vorangehenden Ansprüche, in dem der Schritt der partiellen Polymerisierung die Erhöhung der Temperatur des Lignosulfonats auf der Oberfläche des organischen makromolekularen Materials auf eine Temperatur im Bereich von 110°C bis 150°C umfaßt.

## Revendications

1. Procédé de production d'un agent chimiquement lié, procédé qui comprend :
(a) le fait de disposer d'un matériau macromoléculaire organique résilient, ce matériau macromoléculaire organique se présentant sous forme allongée découpée ou finement divisée ;
(b) le fait de sécher thermiquement, au moins partiellement, le matériau allongé découpé ou finement divisé, dans des conditions permettant à la vapeur d'eau de s'en échapper, de telle sorte que le matériau séché présente, d'une manière prédominante, une surface hydrophobe, et une teneur en eau n'excédant pas 10 % en poids, ce séchage comprenant, éventuellement, une évaporation rapide d'au moins la surface du matériau ;
(c) le fait de soumettre au moins une certaine quantité du matériau séché à un équilibrage de la pression de vapeur, dans des conditions empêchant la vapeur d'eau et d'autres constituants volatils de s'échapper, de telle sorte que la surface hydrophobe, de manière prédominante, soit rendue hydrophile ; et
(d) le fait de mélanger le produit obtenu lors de l'étape c) avec un lignosulfonate, une chaleur suffisante étant appliquée pour maintenir le lignosulfonate sous forme fluide, de sorte que le lignosulfonate forme une pellicule de revêtement sur la surface hydrophile ; et
(e) le fait de provoquer la polymérisation partielle du lignosulfonate sur la surface afin de produire un agent chimiquement lié fluide, sensiblement non-résilient.

2. Procédé selon la revendication 1, dans lequel la teneur en eau, lors de l'étape (b), n'excède pas 5 %.

3. Procédé selon la revendication 1 ou 2, dans lequel la pellicule de revêtement, lors de l'étape (d), est une monocouche ou similaire.

4. Procédé selon l'une quelconque des revendications 1 à 3, dans lequel l'agent chimiquement lié obtenu lors de l'étape (e) est stocké avant de subir une étape ultérieure de traitement, et/ou l'agent chimiquement lié obtenu lors de l'étape (e) subit une étape ultérieure de traitement pour rendre l'agent chimiquement lié sensible à la pression.

5. Procédé selon l'une quelconque des revendications 1 à 4, dans lequel l'agent chimiquement lié obtenu lors de l'étape (e) est traité avec de l'eau ou de la vapeur et/ou de l'urée.

6. Procédé selon l'une quelconque des revendications 1 à 5, dans lequel l'agent chimiquement lié subit une étape ultérieure de traitement comprenant le compactage et la compression de l'agent chimiquement lié.

7. Procédé selon l'une quelconque des revendications 1 à 6, dans lequel le lignosulfonate, sous forme aqueuse, est présent selon une teneur n'excédant pas 15 % en poids, par rapport au produit à surface hydrophile.

8. Procédé selon l'une quelconque des revendications 1 à 7, dans lequel le lignosulfonate est utilisé sous une forme aqueuse contenant de 40 à 60 % en poids sec de lignosulfonate.

9. Procédé selon l'une quelconque des revendications 1 à 8, dans lequel le lignosulfonate est un sel d'ammonium, de sodium, de calcium ou de magnésium.

10. Procédé selon l'une quelconque des revendications 1 à 9, dans lequel le lignosulfonate est sensiblement dépourvu de sucre.

11. Procédé selon l'une quelconque des revendications 1 à 10, dans lequel le matériau résilient comprend de la tourbe pulvérisée ou des boues de curage, se présentant de préférence sous forme de flocons, de poudre ou de granules, ou de l'herbe coupée.

12. Procédé selon l'une quelconque des revendications 1 à 11, dans lequel la polymérisation partielle est réalisée dans un four à air chaud, un four à vide ou au moyen de vis de mélange creuses chauffées à l'huile ou à la vapeur, ou grâce à un dispositif à lit fluidisé à tambour.

13. Procédé selon l'une quelconque des revendications 1 à 12, dans lequel l'agent chimiquement lié est formé sous pression afin de former des agglomérats.

14. Procédé de production d'un agent chimiquement lié, procédé qui comprend :
(a) le fait de fournir un matériau macromoléculaire organique résilient, tel que de la tourbe, ce matériau macromoléculaire organique se présentant sous forme découpée, allongée, ou finement divisée ;
(b) le fait de chauffer et/ou sécher le matériau macromoléculaire organique, pour qu'il présente une siccité n'excédant pas 10 % en poids ;
(c) le fait de mélanger le matériau macromoléculaire organique obtenu lors de l'étape (b) avec un lignosulfonate, une chaleur suffisante étant appliquée pour maintenir le lignosulfonate sous forme fluide, de sorte que le lignosulfonate forme une pellicule de revêtement sur la surface du matériau macromoléculaire organique ;
et
(e) le fait de provoquer la polymérisation partielle du lignosulfonate sur la surface afin de produire un agent chimiquement lié fluide, sensiblement non-résilient.

15. Procédé selon la revendication 14, dans lequel le matériau macromoléculaire organique est mélangé à un matériau organique particulaire, tel qu'un carburant carboné.

16. Procédé selon la revendication 15, dans lequel le matériau macromoléculaire organique est mélangé au matériau organique avant l'étape (c).

17. Procédé selon l'une quelconque des revendications précédentes, dans lequel l'étape de polymérisation partielle comprend le fait d'élever la température du lignosulfonate, à la surface du matériau macromoléculaire organique, à une température comprise entre 110°C et 150°C.
